# FASCICULE DE BREVET EUROPEEN

(11) **EP 2 541 157 B1**
(45) Date de publication et mention de la délivrance du brevet: **22.01.2014**
(21) Numéro de dépôt: 11305814.3
(22) Date de dépôt: 27.06.2011
(51) Int. Cl.: F24D 19/10, G01K 17/06, G01K 17/08

(54) **Répartiteur de coût de chauffage**
Heizkostenverteiler
Heating cost distributor

(43) Date de publication de la demande: 02.01.2013
(73) Titulaire: Itron France, 92130 Issy-Les-Moulineaux (FR)
(72) Inventeur: Arnaud-Godet, Brice, 71850 CHARNAY LES MACON (FR); Giraud, Olivier, 69850 SAINT-MARTIN en HAUT (FR); Abelard, Tristan, 71000 MACON (FR); Guillot-Jérome, Denis, 01310 BUELLAS (FR)
(74) Mandataire: Howson, Richard G.B.

(56) Documents cités:
- EP-A2- 0 099 511
- DE-A1- 4 035 109
- DE-A1- 4 429 934
- DE-B3-102010 003 967
- DE-U1- 29 515 173

## Description

L'invention concerne un répartiteur de coût de chauffage comme décrit dans le document DE 10 2010 003 967B.

Elle concerne plus précisément un répartiteur de coût de chauffage destiné à être fixé sur un élément chauffant, par exemple un radiateur, et comportant dans un boîtier monté sur un adaptateur arrière une carte électronique connectée à un premier capteur de température destiné à la mesure de la température externe de la pièce et à un second capteur de température destiné à la mesure de la température de l'élément chauffant.

Le document de brevet DE 10 2009 005 490 décrit un tel répartiteur de coût de chauffage.

Selon ce document, le second capteur de température destiné à la mesure de la température de l'élément chauffant est fixé à l'extrémité d'un bras flexible réalisé d'une pièce avec la carte électronique.

La fabrication d'un tel agencement est particulièrement complexe. En effet, le bras doit être d'épaisseur inférieure à celle de la carte électronique, afin d'être flexible. Il en résulte deux procédés de fabrication possibles, un moulage spécifique en plus ou moins de couches de matière plastique, lors du moulage de la carte électronique, ou un usinage ultérieur de la carte électronique, afin de diminuer localement son épaisseur. Il en résulte un coût relativement important d'un tel agencement.

Par ailleurs, un tel bras réalisé d'une pièce avec la carte électronique a forcément une flexibilité réduite et ne peut être courbé d'un angle important de l'ordre de 90 degrés.

L'objet de l'invention est de résoudre ces problèmes en proposant un agencement dont la fabrication peut être réalisée sur la ligne de pose de tous les éléments portés par la carte, qui est facile à mettre en oeuvre et peu cher et qui assure une grande flexibilité du bras réalisé.

Pour ce faire, l'invention propose un répartiteur de coût de chauffage destiné à être fixé sur un élément chauffant et comportant dans un boîtier monté sur un adaptateur arrière une carte électronique connectée à un premier capteur de température destiné à la mesure de la température externe et disposé à proximité dudit boîtier et à un second capteur de température destiné à la mesure de la température dudit élément chauffant et disposé à proximité dudit adaptateur, caractérisé en ce que ladite carte électronique, dite principale, porte au moins une nappe flexible d'interconnexion à montage-en-surface connectée à ladite carte électronique principale et à une carte électronique de support d'un desdits capteurs.

Selon un mode de réalisation préféré, ladite carte électronique de support dudit capteur présente un bord de forme identique à une section transversale dudit boîtier et/ou de ledit adaptateur et est disposé en butée contre cette section.

De préférence, ladite carte électronique principale porte une dite nappe d'interconnexion à montage-en-surface connectée à ladite carte électronique principale et à une carte électronique de support dudit capteur destiné à la mesure de la température dudit élément chauffant.

Avantageusement, ladite carte de support dudit capteur destiné à la mesure de la température dudit élément chauffant présente une extrémité en forme de Vé identique à une section transversale d'une rainure dudit adaptateur et est disposé en butée contre cette section.

De préférence, le répartiteur comporte un agencement de type piston et poussant ladite carte électronique de support dudit capteur destiné à la mesure de la température dudit élément chauffant contre ledit adaptateur.

Selon une première variante, ladite carte électronique de support dudit capteur destiné à la mesure de la température dudit élément chauffant comporte un revêtement métallique.

Selon une seconde de variante, ladite carte électronique de support dudit capteur destiné à la mesure de la température est maintenue contre un élément conducteur thermique, ladite carte électronique de support dudit capteur destiné à la mesure de la température dudit élément chauffant et ledit élément conducteur thermique étant pris en sandwich entre deux brides solidarisées audit adaptateur.

Ledit élément conducteur thermique est de préférence en mousse conductrice thermique.

L'invention est décrite ci-après plus en détail à l'aide de figures illustrant des modes de réalisation préféré de l'invention.
Les figures 1A et 1B sont des vues en coupe selon le plan longitudinal central d'un répartiteur conforme à l'invention.
Les figures 2A et 2B représentent des vues en coupe et en perspective d'un répartiteur conforme à l'invention.
La figure 3 représente une autre vue en coupe et en perspective d'un répartiteur conforme à l'invention, selon une première variante.
Les figures 4A et 4B représentent cette autre vue en coupe et en perspective d'un répartiteur conforme à l'invention, selon une seconde variante.
Les figures 5A à 5E illustrent un procédé de réalisation préféré d'un répartiteur conforme à l'invention.

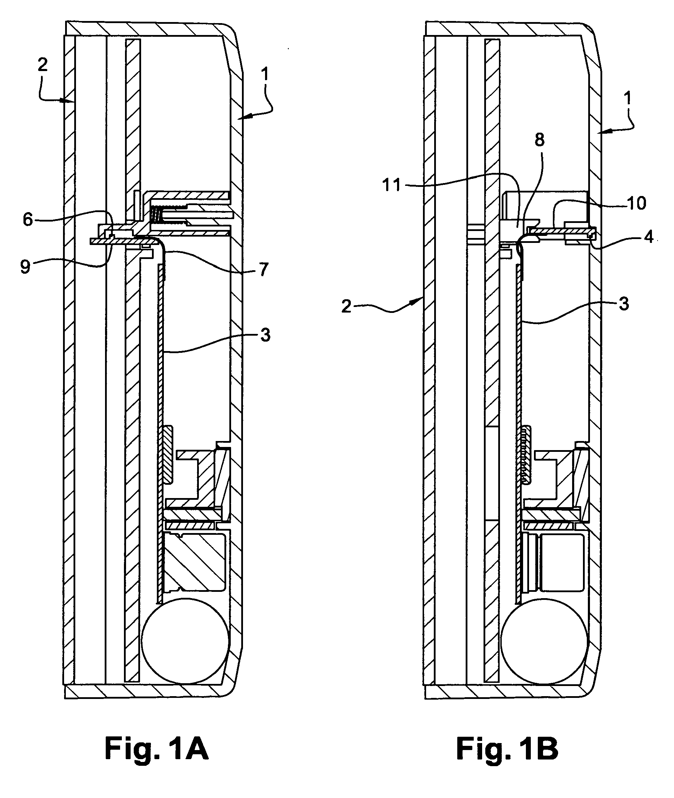

Comme représenté sur les figures 1A et 1B, illustrant la vue de part et d'autre du plan longitudinal central d'un répartiteur de coût de chauffage destiné à être fixé sur un élément chauffant, ce dernier comporte dans un boîtier 1 monté sur un adaptateur arrière 2 une carte électronique 3 ou carte de circuits imprimés disposée parallèlement à l'adaptateur 2 et connectée à un premier capteur de température 4 destiné à la mesure de la température externe et disposé à proximité du boîtier 1 et à un second capteur de température 6 destiné à la mesure de la température de l'élément chauffant et disposé à proximité de l'adaptateur 2.

Selon l'invention, la carte électronique 3, dite principale, porte au moins une nappe flexible d'interconnexion à montage-en-surface connectée à la carte électronique principale 3 et à une carte électronique de support d'un des capteurs 4,6.

Les interconnexions à montage-en-surface appelées couramment SMI (« Surface Mount Interconnect ») sont des connexions flexibles connus en soi, où les circuits imprimés flexibles sont tracés sur un support souple, généralement avec seulement une ou deux couches de cuivre.

De préférence, comme représenté, la carte électronique principale 3 porte une nappe d'interconnexion à montage-en-surface 7, 8 connectée à la carte électronique principale 3 et à une carte électronique de support 9, 10 de chacun des capteurs 4,6.

Par ailleurs, la carte électronique de support de capteur présente un bord de forme identique à une section transversale du boîtier et/ou de l'adaptateur et est disposé en butée contre cette section, comme il sera développé plus loin.

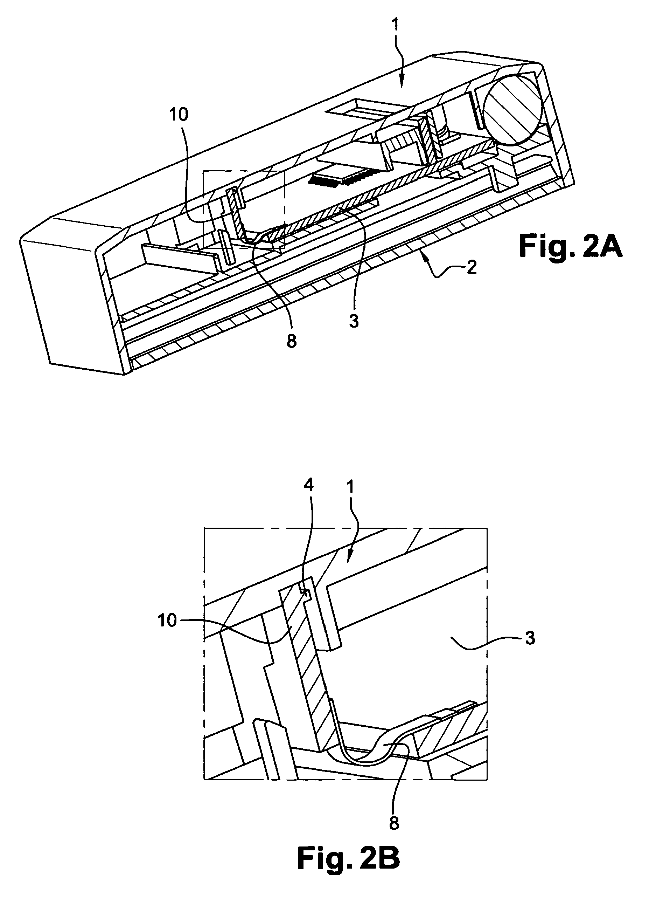

L'agencement du côté du capteur de température 4 destiné à la mesure de la température externe est particulièrement représenté sur les figures 2A et 2B.

La nappe 8 connectant la carte électronique principale 3 et la carte électronique de support 10 du capteur est pliée à 90 degrés pour amener cette carte électronique de support 10 perpendiculairement à la face intérieure du boîtier 1 où elle est logé dans une rainure du boîtier 1 et est maintenu en place par un agencement de clipage 11 représenté sur la figure 1B.

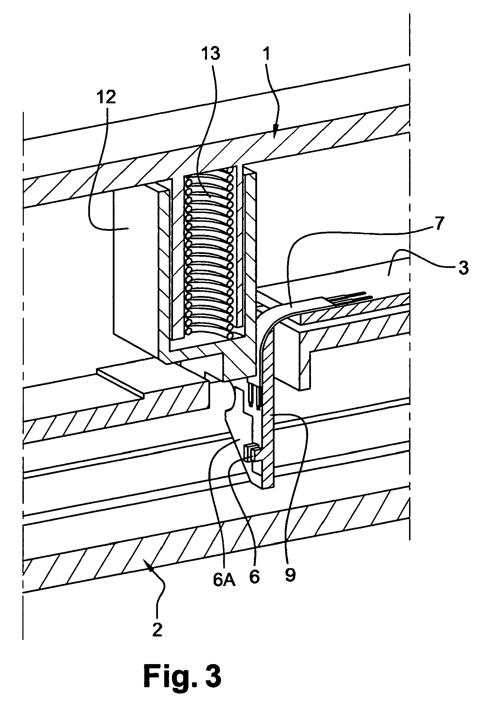

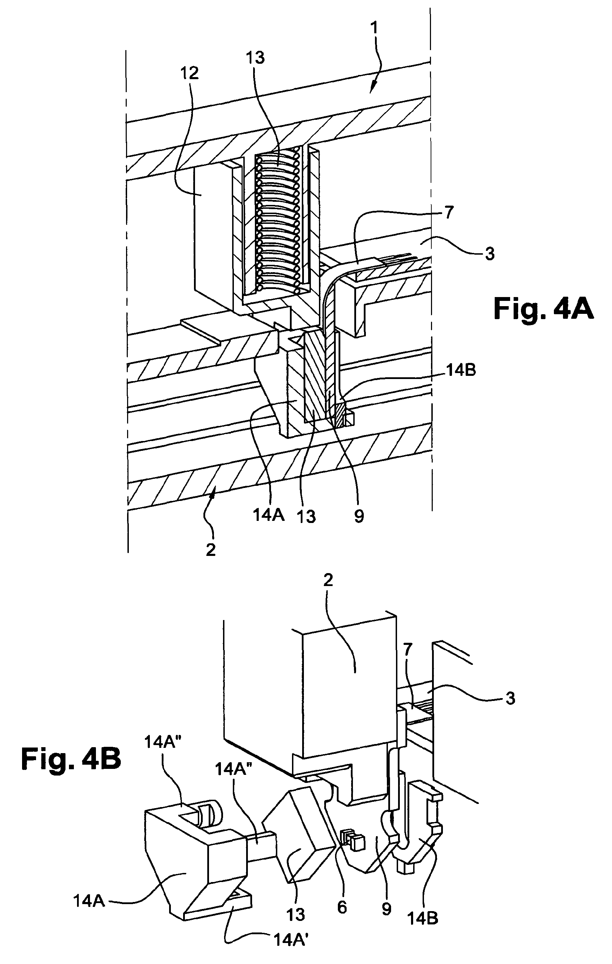

L'agencement du côté du capteur de température 6 destiné à la mesure de la température de l'élément chauffant est particulièrement représenté sur les figures 3, 4A et 4B.

La nappe 7 connectant la carte électronique principale 3 et la carte électronique de support 9 du capteur 6 est pliée à 90 degrés pour amener cette carte électronique de support 9 perpendiculairement à la face intérieure de l'adaptateur 2 où elle est logée dans une rainure de l'adaptateur 2.

Le répartiteur comporte un agencement de type piston 12 solidarisé à cette carte de support 9 et soumis à un ressort 13 en appui contre la face intérieure du boîtier 1. Cet agencement de type piston 12 pousse la carte de support 9 du second capteur 6 contre la face intérieure de l'adaptateur 2.

Cette carte de support 9 présente une extrémité en forme de Vé identique à une section transversale d'une rainure de l'adaptateur 2 et est ainsi disposée en butée contre cette section.

Une première variante de réalisation est représentée sur la figure 3. Selon cette variante, au moins la face portant le capteur 6 de l'extrémité en forme de Vé de la carte électronique de support 9 comporte un revêtement métallique 6A, de préférence en alliage d'aluminium, qui assure une bonne conduction thermique entre l'adaptateur 2 et le capteur 6.

Une seconde variante de réalisation est représentée sur les figures 4A et 4B, la figure 4B étant une vue éclatée. Selon cette variante, la face portant le capteur 6 de l'extrémité en forme de Vé de la carte électronique de support 9 est maintenue contre un élément conducteur thermique 13, de préférence en mousse conductrice thermique, la carte de support 9 et l'élément conducteur thermique 13 étant pris en sandwich entre deux brides 14A, 14B solidarisées à l'adaptateur 2. La mousse conductrice thermique utilisée peut être une mousse appelée « Gap Pad » commercialisé par la société Bergquist Company.

Comme particulièrement visible sur la figure 4B, une des brides 14A comporte un socle 14A' fixé sur la face intérieure de l'adaptateur 2 et deux bras latéraux 14A" entre lesquels sont disposés l'élément conducteur thermique 13 et l'extrémité en forme de Vé de la carte de support 9 du capteur 6, où ils sont pris en sandwich au moyen de l'autre bride 14B qui est fixée sur la première bride 14A" par emboîtage et encliquetage.

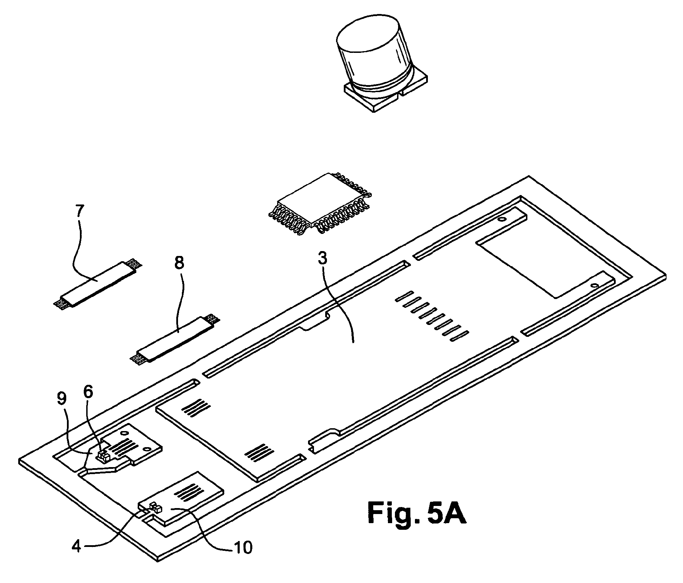

Les figures 5A à 5E illustrent un procédé de réalisation préféré d'un répartiteur conforme à l'invention.

La carte électronique principale 3 et les deux cartes électroniques de support 9, 10 sont réalisées d'une seule opération de moulage et sont reliées comme visible sur la figure 5A par un encadrement commun. Dans cette situation, les divers éléments électroniques sont connectés à la carte électronique principale 3, les capteurs 4, 6 sont solidarisés à leur carte électronique de support 9, 10 correspondante et les nappes d'interconnexion à montage-en-surface 7, 8 sont connectées à la carte électronique principale 3 et à la carte électronique de support 9, 10 correspondante.

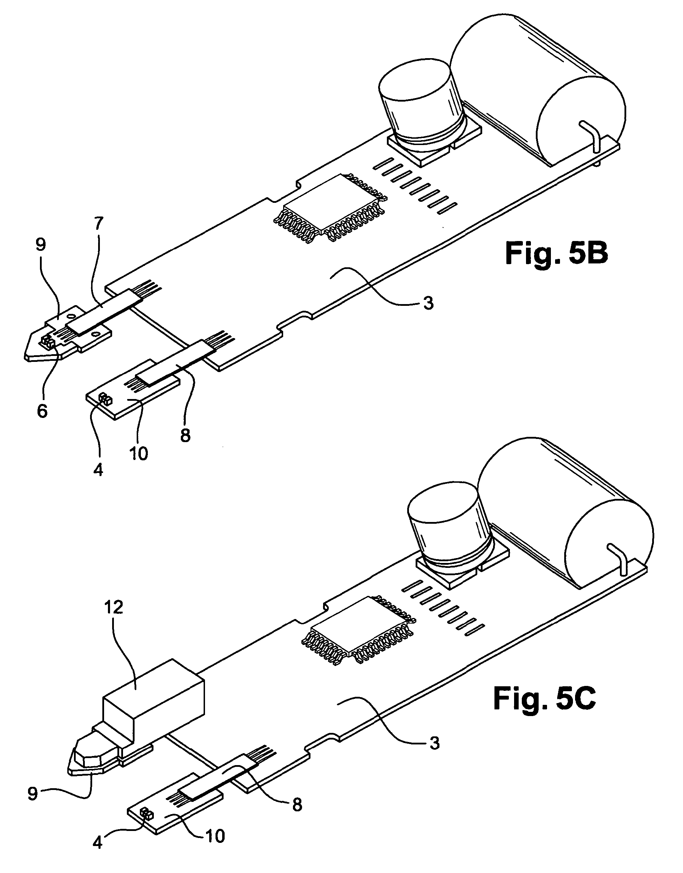

La carte électronique principale 3 et les deux cartes électroniques de support 9, 10 équipées sont alors détachées de leur encadrement commun comme visible sur la figure 5B.

L'agencement de type piston 12 est alors solidarisé à la carte électronique de support 9, de préférence par bouterolage, comme illustré sur la figure 5C.

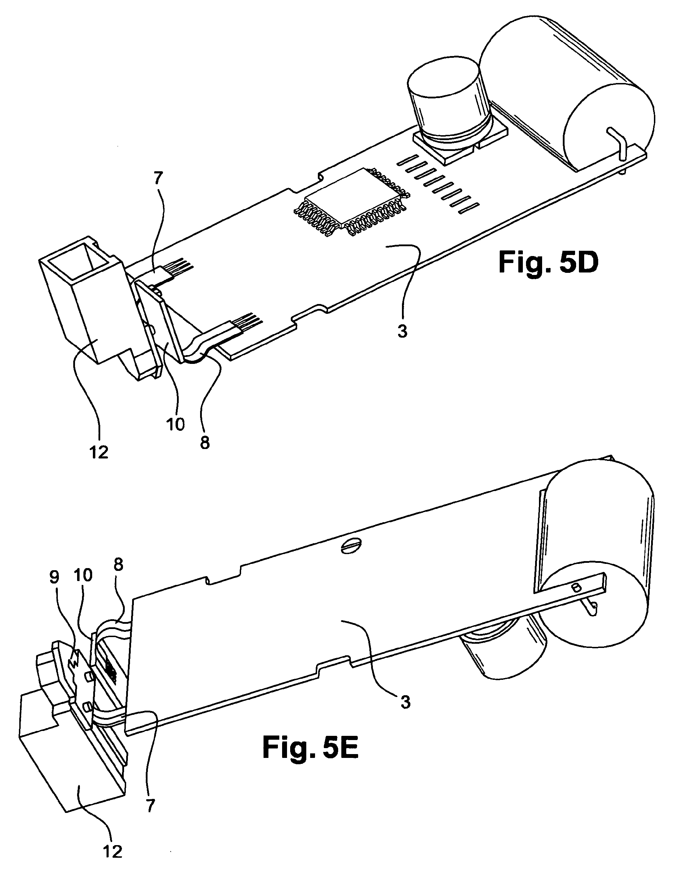

Les nappes d'interconnexion à montage-en-surface 7, 8 sont ensuite pliés de 90 degrés de part et d'autre de la carte électronique principale 3 comme visible sur la figure 5D et, après retournement illustré sur le figure 5E, cet ensemble pré-équipé peut être mis en place contre l'adaptateur 2, avant fermeture du boîtier 1.

## Revendications

1. Répartiteur de coût de chauffage destiné à être fixé sur un élément chauffant et comportant dans un boîtier (1) monté sur un adaptateur arrière (2) une carte électronique (3) dite principale connectée à un premier capteur de température (4) destiné à la mesure de la température externe et disposé à proximité dudit boîtier (1) et à un second capteur de température (6) destiné à la mesure de la température dudit élément chauffant et disposé à proximité dudit adaptateur (2), **caractérisé en ce que** ladite carte électronique principale (3) porte au moins une nappe flexible d'interconnexion à montage-en-surface (7, 8) connectée à ladite carte électronique principale (3) et à une carte électronique de support (8, 9) d'un desdits capteurs (4, 6).

2. Répartiteur selon la revendication précédente, **caractérisé en ce que** ladite carte électronique de support (9, 10) dudit capteur présente un bord de forme identique à une section transversale dudit boîtier (1) et/ou dudit adaptateur (2) et est disposé en butée contre cette section.

3. Répartiteur selon l'une des revendications précédentes, **caractérisé en ce que** ladite carte électronique principale (3) porte une dite nappe d'interconnexion à montage-en-surface (7) connectée à ladite carte électronique principale (3) et à une carte électronique de support (9) dudit capteur (6) destiné à la mesure de la température dudit élément chauffant.

4. Répartiteur selon la revendication précédente, **caractérisé en ce que** ladite carte de support (9) dudit capteur (6) destiné à la mesure de la température dudit élément chauffant présente une extrémité en forme de Vé identique à une section transversale d'une rainure dudit adaptateur (2) et est disposés en butée contre cette section.

5. Répartiteur selon la revendication 3 ou 4, **caractérisé en ce qu'**il comporte un agencement de type piston (12) et poussant ladite carte électronique (9) de support dudit capteur (6) destiné à la mesure de la température dudit élément chauffant contre ledit adaptateur (2).

6. Répartiteur selon l'une des revendications 3 à 5, **caractérisé en ce que** ladite carte électronique (9) de support dudit capteur (6) destiné à la mesure de la température dudit élément chauffant comporte un revêtement métallique (6A).

7. Répartiteur selon l'une des revendications 3 à 5, **caractérisé en ce que** ladite carte électronique (9) de support dudit capteur (6) destiné à la mesure de la température dudit élément chauffant est maintenue contre un élément conducteur thermique (13), ladite carte électronique de support (9) dudit capteur (6) destiné à la mesure de la température dudit élément chauffant et ledit élément conducteur thermique (13) étant pris en sandwich entre deux brides (14A, 14B) solidarisées audit adaptateur (2).

8. Répartiteur selon la revendication précédente, **caractérisé en ce que** ledit élément conducteur thermique (13) est en mousse conductrice thermique.

## Patentansprüche

1. Heizkostenverteiler, der dazu bestimmt ist, auf einem Heizelement befestigt zu werden, und umfassend in einem Gehäuse (1), das auf einem hinteren Adapter (2) montiert ist, eine so genannte Hauptelektronikkarte (3), die an einen ersten Temperaturfühler (4), der zum Messen der äußeren Temperatur bestimmt und in der Nähe des Gehäuses (1) angeordnet ist, und an einen zweiten Temperaturfühler (6) angeschlossen ist, der zum Messen der Temperatur des Heizelements bestimmt und in der Nähe des Adapters (2) angeordnet ist, **dadurch gekennzeichnet, dass** die Hauptelektronikkarte (3) mindestens eine flexible Verbindungsschicht (7, 8), die im Auflötverfahren aufgebracht wird, trägt, die an die Hauptelektronikkarte (3) und an eine Hilfselektronikkarte (8, 9) eines der Fühler (4, 6) angeschlossen ist.

2. Verteiler nach dem vorhergehenden Anspruch, **dadurch gekennzeichnet, dass** die Hilfselektronikkarte (9, 10) des Fühlers einen Rand mit identischer Form zu einem Querschnitt des Gehäuses (1) und/oder des Adapters (2) aufweist und am Anschlag an diesem Querschnitt angeordnet ist.

3. Verteiler nach einem der vorhergehenden Ansprüche, **dadurch gekennzeichnet, dass** die Hauptelektronikkarte (3) eine so genannte Verbindungsschicht (7), die im Auflötverfahren aufgebracht wird, trägt, die an die Hauptelektronikkarte (3) und an eine Hilfselektronikkarte (9) des Fühlers (6), der zum Messen der Temperatur des Heizelements bestimmt ist, angeschlossen ist.

4. Verteiler nach dem vorhergehenden Anspruch, **dadurch gekennzeichnet, dass** die Hilfskarte (9) des Fühlers (6), der zum Messen der Temperatur des Heizelements bestimmt ist, ein V-förmiges Ende aufweist, das mit einem Querschnitt einer Nut des Adapters (2) identisch und am Anschlag an diesem Querschnitt angeordnet ist.

5. Verteiler nach Anspruch 3 oder 4, **dadurch gekennzeichnet, dass** er eine Anordnung vom Typ Kolben (12) umfasst, der die Hilfselektronikkarte (9) des Fühlers (6), der zum Messen der Temperatur des Heizelements bestimmt ist, gegen den Adapter (2) schiebt.

6. Verteiler nach einem der Ansprüche 3 bis 5, **dadurch gekennzeichnet, dass** die Hilfselektronikkarte (9) des Fühlers (6), der zum Messen der Temperatur des Heizelements bestimmt ist, eine metallische Verkleidung (6A) umfasst.

7. Verteiler nach einem der Ansprüche 3 bis 5, **dadurch gekennzeichnet, dass** die Hilfselektronikkarte (9) des Fühlers (6), der zum Messen der Temperatur des Heizelements bestimmt ist, an ein thermisch leitendes Element (13) gehalten wird, wobei die Hilfselektronikkarte (9) des Fühlers (6), der zum Messen der Temperatur des Heizelements bestimmt ist, und das thermisch leitende Element (13) zwischen zwei Flaschen (14A, 14B), die mit dem Adapter (2) verbunden sind, angeordnet ist.

8. Verteiler nach dem vorhergehenden Anspruch, **dadurch gekennzeichnet, dass** das thermisch leitende Element (13) aus thermisch leitendem Schaumstoff besteht.

## Claims

1. Heating cost allocator intended to be fixed on a heating element and having, in a housing (1) mounted on a rear adapter (2), a so-called main electronic card (3) connected to a first temperature sensor (4) intended for the measurement of the external temperature and disposed close to said housing (1) and to a second temperature sensor (6) intended for the measurement of the temperature of the said heating element and disposed close to the said adaptor (2), **characterised in that** the said main electronic card (3) has at least one flexible surface-mounting interconnection ribbon cable (7, 8) connected to the said main electronic card (3) and to an electronic support card (8, 9) for one of the said sensors (4, 6).

2. Allocator as claimed in the preceding claim, **characterised in that** the said electronic support card (9, 10) of the said sensor has an edge with a shape identical to a cross-section of the said housing (1) and/or the said adapter (2) and is disposed in abutment against this section.

3. Heating cost allocator as claimed in one of the preceding claims, **characterised in that** the said main electronic card (3) has a said surface-mounting interconnection ribbon cable (7) connected to the said main electronic card (3) and to an electronic support card (9) for the said sensor (6) intended for the measurement of the said heating element.

4. Allocator as claimed in the preceding claim, **characterised in that** the said support card (9) of the said sensor (6) intended for the measurement of the temperature of the said heating element has a V-shaped end identical to a cross-section of a groove of the said adapter (2) and is disposed in abutment against this section.

5. Allocator as claimed in Claim 3 or 4, **characterised in that** it includes an arrangement of the piston type (12) pushing the said electronic support card (9) for the said sensor (6) intended for the measurement of the temperature of the said heating element against the said adapter (2).

6. Allocator as claimed in one of Claims 3 or 5, **characterised in that** the said electronic support card (9) for the said sensor (6) intended for the measurement of the temperature of the said heating element includes a metal coating (6A).

7. Allocator as claimed in one of Claims 3 or 5, **characterised in that** the said electronic support card (9) for the said sensor (6) intended for the measurement of the temperature of the said heating element is held against a thermal conductor element (13), the said electronic support card (9) for the said sensor (6) intended for the measurement of the temperature of the said heating element and the said thermal conductor element (13) being sandwiched between two flanges (14A, 14B) integral with the said adapter (2).

8. Allocator as claimed in the preceding claim, **characterised in that** the said thermal conductor element (13) is made of thermal conductive foam.
